# EUROPEAN PATENT SPECIFICATION

(11) **EP 2 828 151 B1**
(45) Date of publication and mention of the grant of the patent: **04.03.2020**
(21) Application number: 13764656.8
(22) Date of filing: 21.03.2013
(51) Int. Cl.: B64D 11/00

(54) **AIRCRAFT CLASS DIVIDER**
FLUGZEUGKLASSENTEILER
SÉPARATEUR DE CLASSE D'AÉRONEF

(30) Priority: 21.03.2012 US 201213426451; 07.11.2012 US 201213671324
(43) Date of publication of application: 28.01.2015
(73) Proprietor: Heath Tecna Inc., Bellingham, Washington 98226 (US)
(72) Inventor: BURROWS, Ralph Martin, Bellingham, WA 98226 (US); CHANDLER, Glenn Casey, Bellingham, WA 98226 (US)
(74) Representative: Boult Wade Tennant LLP
(86) International application number: PCT/US2013/033245
(87) International publication number: WO 2013/142660

(56) References cited:
- CA-A1- 2 614 714
- RU-C2- 2 403 186
- US-A- 5 816 534
- US-A1- 2009 230 245
- US-B1- 6 523 779

## Description

### BACKGROUND OF THE DISCLOSURE

### a) Field of the Disclosure

This disclosure relates to the field of class dividers, such as those used in passenger cabins of commercial aircraft to divide passenger sections. Document CA 2 614 714 shows an aircraft cabin partition comprising a curtain, a rigid, fixed vertical panel and an element which can move vertically.

### SUMMARY OF THE DISCLOSURE

Disclosed herein is an aircraft cabin divider according to claim 1. The aircraft cabin divider is for providing part of a visual separation between sections of a passenger cabin within a commercial aircraft.

### BRIEF DESCRIPTION OF THE DRAWINGS

Fig. 1 is an end view of one example of the invention.
Fig. 2 is a face cutaway view of the example of Fig. 1 with a luggage stowage compartment in a closed position.
Fig. 3 is a face cutaway view of the example of Fig. 1 with the luggage stowage compartment shown in an open position, and in a closed position.

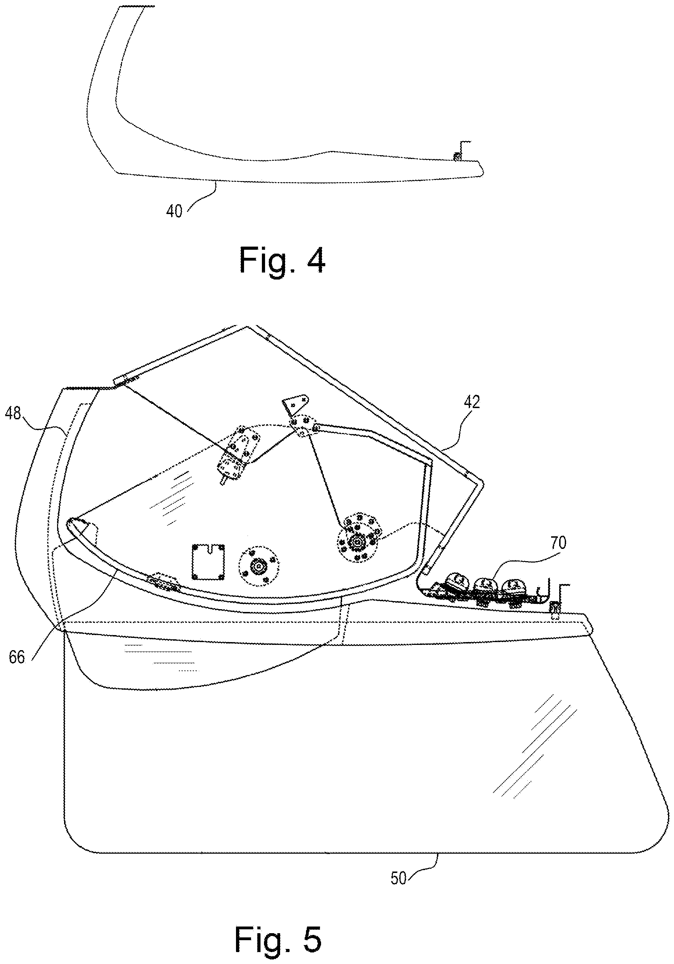

Fig. 4 is a face view of a support arm component of the example of Fig. 1.
Fig. 5 is a face view of the example of Fig. 3 with several components removed.
Fig. 6 is a face view of a view block component of Fig. 1.
Fig. 7 is a face cutaway view of a second example with the luggage stowage compartment in a closed position.
Fig. 8 is a face cutaway view of the example of Fig. 7 with the luggage stowage compartment shown in a closed position.
Fig. 9 is a cutaway detail view of an upper attachment device as shown in area 9 of Fig. 7.
Fig. 10 is a highly schematic environmental view of a third example of the cabin divider.
Fig. 11 is an isometric view of a slightly different version of the example shown in Fig. 10.
Fig. 12 is a side view of the example of Fig. 11.
Fig. 13 is an end view of the example of Fig. 11
Fig. 13a is a detail view of the region 13a of Fig. 13.
Fig. 14 is a cutaway view of the example of Fig. 11.
Fig. 15 is an assembly view of the example of Fig. 11.
Fig. 16 is an assembled view of the components shown in Fig. 15.
Fig. 17 is a detail view of the support arm shown in Fig. 14.
Fig. 18 is a plan view of the support arm shown in Fig. 14.

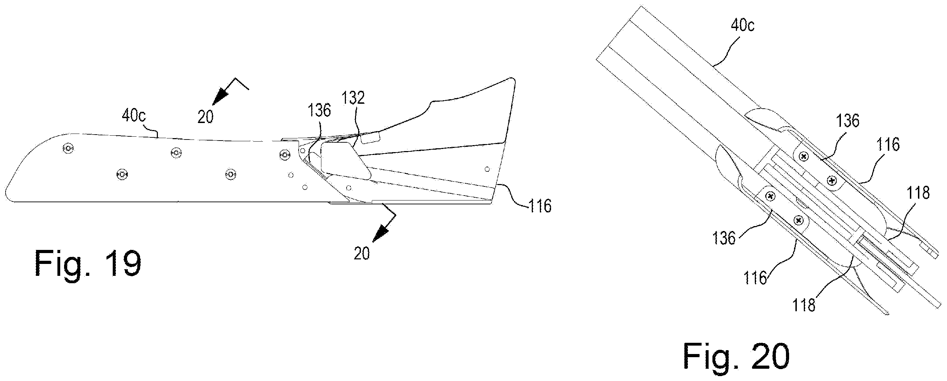

Fig. 19 is a top detail view of the components shown in Fig. 11.
Fig. 20 is a sectional view taken along line 20-20 of Fig. 19.

### DESCRIPTION OF THE PREFERRED EMBODIMENTS

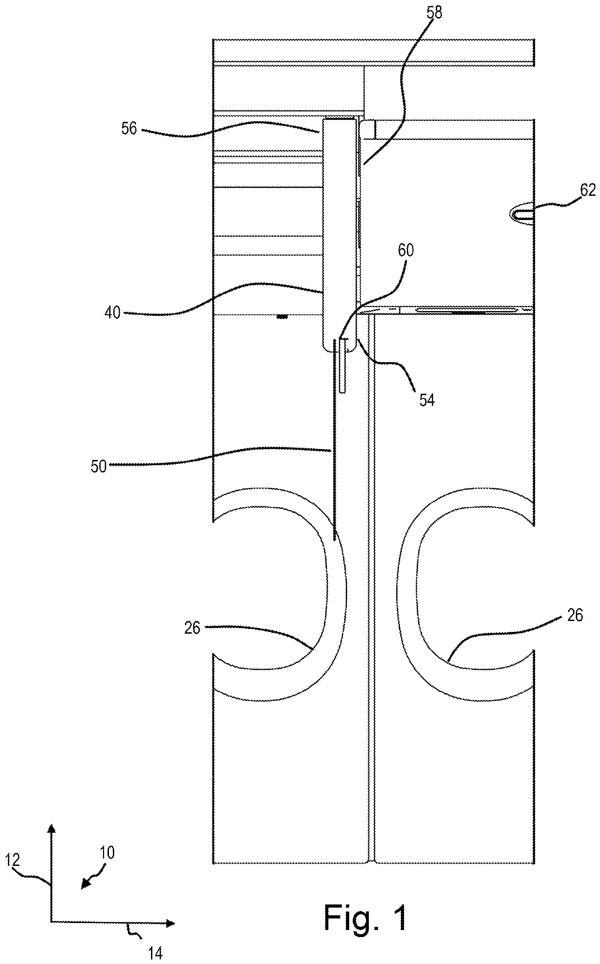

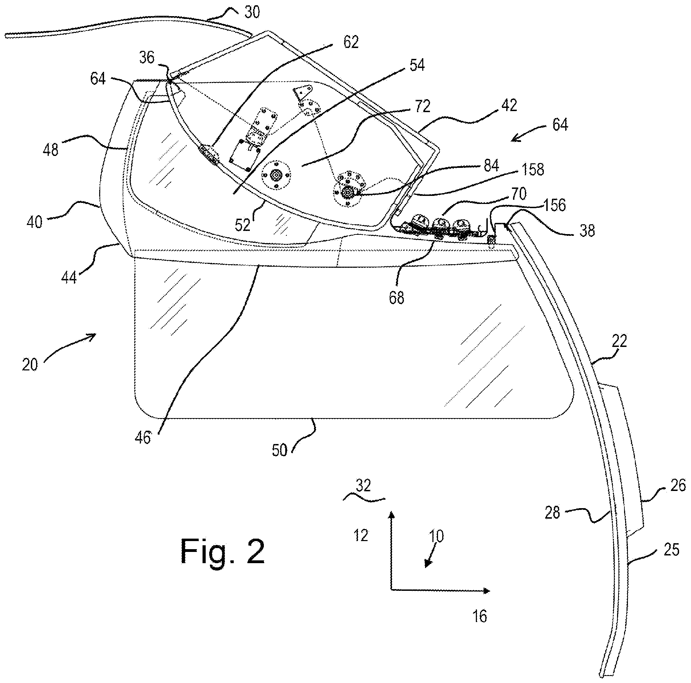

Before beginning a detailed description of the components, an axes system 10 is shown in the drawings to facilitate explanation of the relative positioning of the components. The axes system 10 shown in Figs. 1 and 2 utilizes a vertical axis 12, and a transverse axis 16 lying in a horizontal plane and generally orthogonal to the longitudinal axis of the aircraft body. The axes system 10 also comprises a longitudinal axis 14, in a horizontal plane and generally parallel to the longitudinal axis of the aircraft body. The relative terms inboard and outboard are used to describe relative positioning relative to the plane containing the longitudinal axis and the vertical axis and passing down the center of the aircraft. These relative terms are used in reference to bins (buckets) attached at positions adjacent the hull of the aircraft, although other attachment positions and orientations are still within the scope of the disclosure. This axes system, the relative terms, and the axes defined are not intended to limit the disclosure, but are used to aid in description only.

Looking to Fig. 2, this example of the cabin divider 20 is shown attached to the frame 22 of an aircraft 25 through a luggage stowage compartment 42. A plurality of windows 26 are also attached to the frame, as well as an inner sidewall 28 and ceiling 30. While the cabin divider 20 may be attached to the frame 22 through the sidewall 28 it may also be attached through the luggage stowage compartments 42 as shown, through the seats, flooring, or other components within the passenger cabin 32. The example shown engages a luggage stowage compartment 42 at one end 36, and the frame at a second end 38 adjacent the passenger service units (PSU) 68. The cabin divider 20 may alternatively be attached directly to the inboard passenger service unit rail (supporting PSU 68).

Other types of visual blocks have been previously used to separate different sections of an aircraft passenger cabin. For example, curtains are often used to separate the First Class section from the Coach cabin. One cabin divider is described in US patent 5,165,626.

The advent of bucket-style luggage stowage compartments 42 has resulted in many of these cabin dividers being less than satisfactory in use. In the newer bucket style compartments, where the luggage stowage bucket itself repositions when opening, such cabin divider/curtain combinations often interfere with operation of the bucket, were therefore difficult to operate properly, and often did not function well. Prior shelf-style compartments such as shown in the '626 patent did not cause such problems in prior cabin divider use and operation. This is in part due to the operation wherein the compartment door opens inward and upward, but the lower section of the compartment is generally stationary.

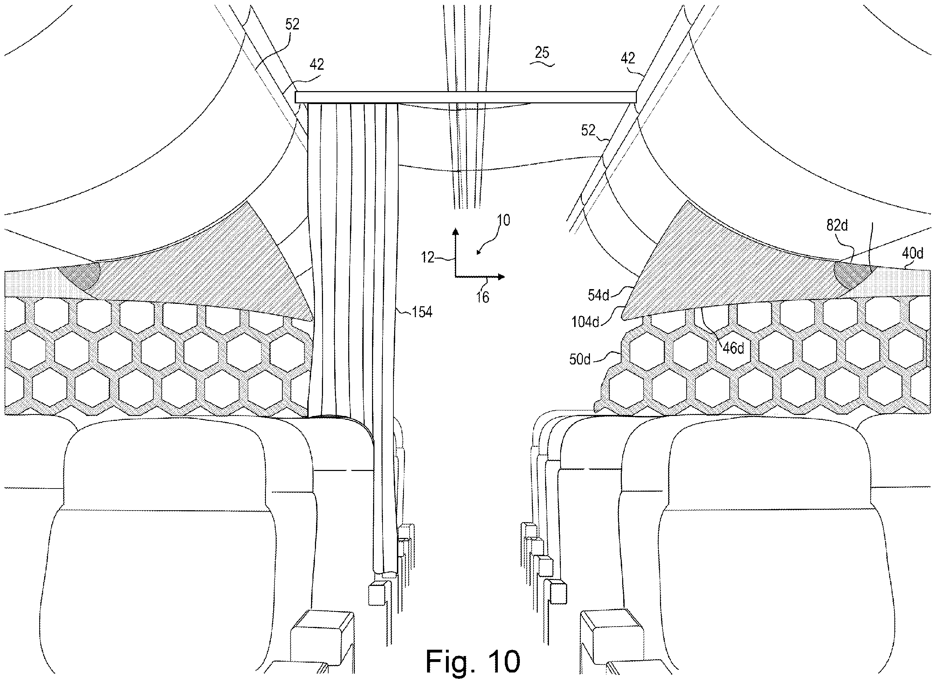

The cabin divider shown herein may be used in conjunction with an aisleway curtain 154 as shown in Fig. 10, and generally overcomes the challenges faced by the implementation of bucket style luggage compartments shown in prior art cabin compartment dividers.

The cabin divider 20 in the example of Fig. 2 comprises a support arm 40 which, as previously mentioned, attaches at a first end 36 to the luggage stowage compartment 42. The support arm 40 may alternatively attach to other components of the aircraft 25. The second end 38 of the support arm 40 may be attached to the frame 22, luggage stowage compartment 42, or other components of the aircraft 25. The support arm 40 has an outer edge 44 adjacent the aisleway of the aircraft passenger cabin 32, a lower edge 46 adjacent a curtain 50, an inner edge 48 forming a cutout to allow the face 52 of the stowage compartment 42 to open (pivot) without interference from the support arm 40. As it may be desired to position the cabin divider 20 at any longitudinal position along the luggage stowage compartment 42, this support arm 40 arrangement is beneficial in many aspects. It will usually be advantageous to avoid positioning the cabin divider 20 longitudinally in the cabin where it may interfere with the latches 62 of the compartment faces, and/or the PSU 68 which often include lights 70, vents, etc.as seen in Fig. 2. In one example, the cabin divider 20 is positioned above the seat back of a passenger seat (see Fig. 10), where the cabin divider 20 is unlikely to interfere with a PSU 68.

In one form, as shown for example in Fig. 2, the curtain 50 is attached to and supported by the lower edge 46 of the support arm 40. The curtain 50 may be comprised of a rigid material such as wood, polymers, resin impregnated fiberglass, or alternately be a non-rigid material such a woven fabric, thin sheet polymers, or equivalents of either sort. When non-rigid materials are used, the curtain may be positionably attached to the support arm, such as by rings, sliders, or equivalents so as to be transversely repositionable. During take-off and landing for example, it may not be desirable to obscure the view of sky marshals and/or crew between sections of an aircraft. Thus the curtain may be transversely repositioned toward the inner sidewall 28. The curtain may extend downward a short distance, all the way to the floor of the passenger cabin, or may extend, as shown in Fig. 10, to the top of a passenger seat-back in such a way that the seat back in a fully upright position provides additional view separation between sections of the aircraft.

To visually block the region between the support arm 40 and the face 52 of the luggage stowage compartment 42, a positionable view block 54 is provided. The view block 54 attaches to the face 52 of the luggage stowage compartment 42, to bias the view block 54 against the face 52 of the luggage stowage compartment 42.

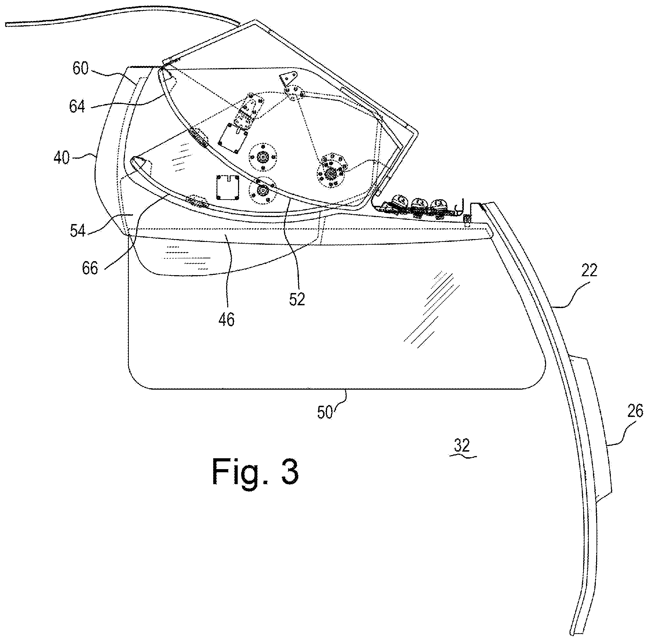

While the view block 54 may be provided adjacent either the longitudinally forward side 56 or longitudinally rearward side 58 (see Fig. 1 for reference sides) of the support arm 40, an example wherein a gap 60 is provided in the support arm 40 for the view block 54 to extend into and possibly through is shown in Fig. 3. Thus, when the luggage stowage compartment 42 is closed, the view block 54 may extend only a short distance into the gap 60. When the luggage stowage compartment 42 is opened, the view block 54 repositions from the closed compartment position 64, to the open compartment position 66 as shown in Fig. 3.

The view block 54 in one form may also reposition from an extended position when the luggage stowage compartment 42 is closed, to a position substantially within, and in one example not extending beyond, the support arm 40 and/or curtain 50.

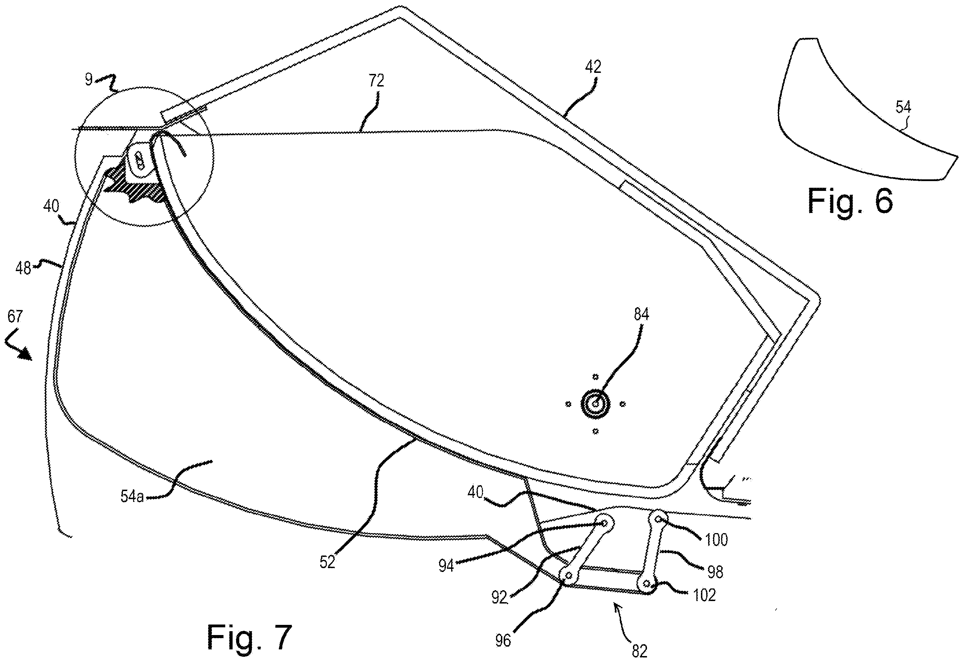

A second example, which is not part of the claimed invention, is shown in Figs. 7- 9. In this second example, components similar to those in the first example are denoted with the suffix "a". For example, the view block of the first example is labeled as 54, while the view block of the second example is labeled as 54a.

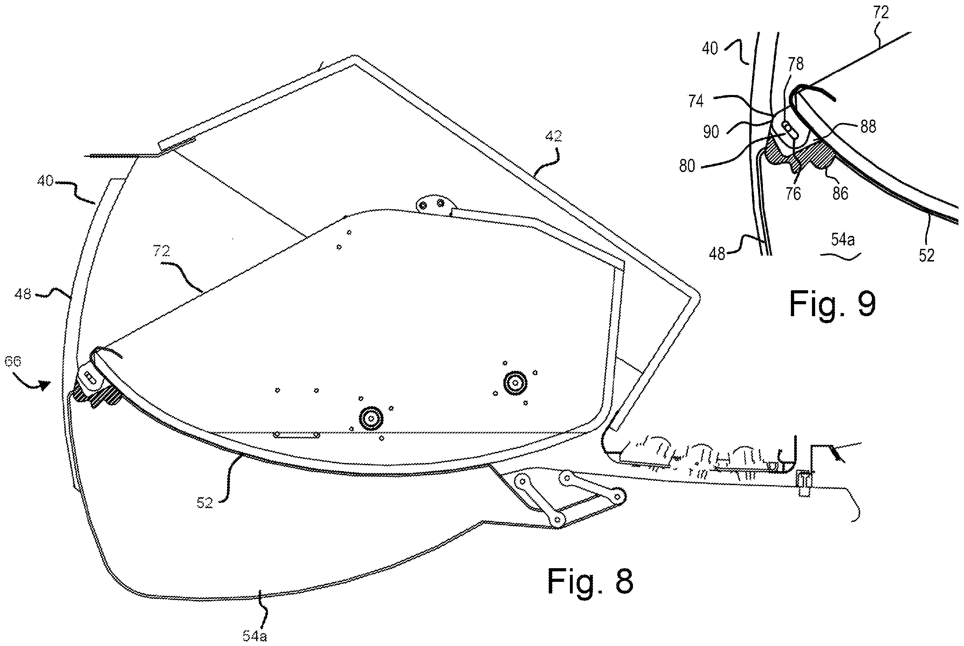

In this second example, the view block 54a is attached to the face 52 of the bucket 72 portion of the luggage stowage compartment 42 in a very different manner from that shown in the example above. In this example a bracket 74 (Fig. 9) is attached to the face 52 of the bucket 72 by way of fasteners, adhesive, or by clamping to the upper edge of the bucket face 52. The bracket 74 may extend generally orthogonal to the face 52 of the bucket 72 and provide an attachment location 76 for the view block 54a to attach to, again by way of fasteners or adhesive, or the bracket 74 may be molded with the view block 54 as a unitary structure.

In the example of Fig. 9, the bracket 74 comprises a surface defining a slot 78 which receives a guide pin 80 which is allowed to reposition somewhat therein. This slot 78 is provided where the outboard attachment mechanism 82 is not centered about the pivot 84 (Figs. 2 and 7)of the bucket 72 which may be configured to allow some degree of relative motion between the view block 54a and the face 52 of the bucket 72 to avoid binding during operation (opening and closing) of the bucket 72.

In Fig. 9, the view block 54a is cut out (86) to show an internal channel 88 which receives the transversely extending portion 90 of the bracket 74 to aid in structural support, and to prohibit small items such as fingers from getting caught (pinched) in the apparatus during operation. The guide pin 80 in this example passes through this channel 88.

The example of an outboard attachment location 82 shown in Fig. 7 comprises an offset four bar linkage which provides for rotation and movement of the view block 54a in a similar arc to that scribed about the pivot 84. The four bar linkage in this example comprises a plurality of link arms 92 and 98. The first link arm is an inboard link arm 92, attached to the support arm 40, frame 22, luggage stowage compartment 42, or other portions of the aircraft at an upper attachment location (pivot) 94; and at a lower attachment location (pivot) 96 to the view block 54a. The second link arm is an outboard link arm 98, which may be attached to the support arm 40, frame 22, compartment 42, or other portions of the aircraft at an upper attachment location (pivot) 100; and at a lower attachment location (pivot) 102 to the view block 54a. As the distance between the axes of the upper pivots 94 and 100 may be less than the distance between the lower pivots 96 and 102, the effective pivot radius of the view block 54a is designed to be similar to the pivot radius of the bucket pivot 84. Thus, there is expected to be very little relative motion between the face 52 of the bucket 72 and the view block 54a.

Generally, the view block 54a engages a support arm 40 as shown in Fig. 2 and described above.

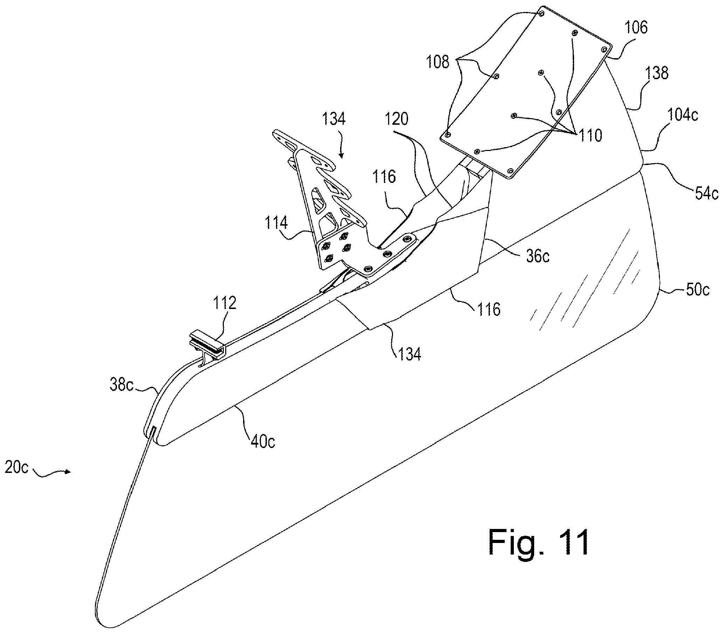

The view block curtain of the example shown in Fig. 10 is functionally similar to the example of Fig. 11, but different in structure and ornamental design, and is therefore numbered 50d in following with the labeling system previously utilized.

The same axes system 10 is used as is used in previous examples, along with the same labels for the same elements, such as the aircraft 25, luggage stowage compartment 42 and compartment face 52.

In the example shown in Fig. 10 the positionable view block 54d is attached to the compartment face 52 of the luggage stowage compartment 42. The view block component 54d, in this example, is in contact with the support arm 40d and may not be supported on its inboard edge 104d by the support arm 40d. Rather, the inboard edge 104d may be fixed to the face 52 of the luggage stowage compartment 42. The positionable view block 54d of this example may be in sliding contact with the support arm 40d at an outboard end 106d. A joint connection 82d is shown.

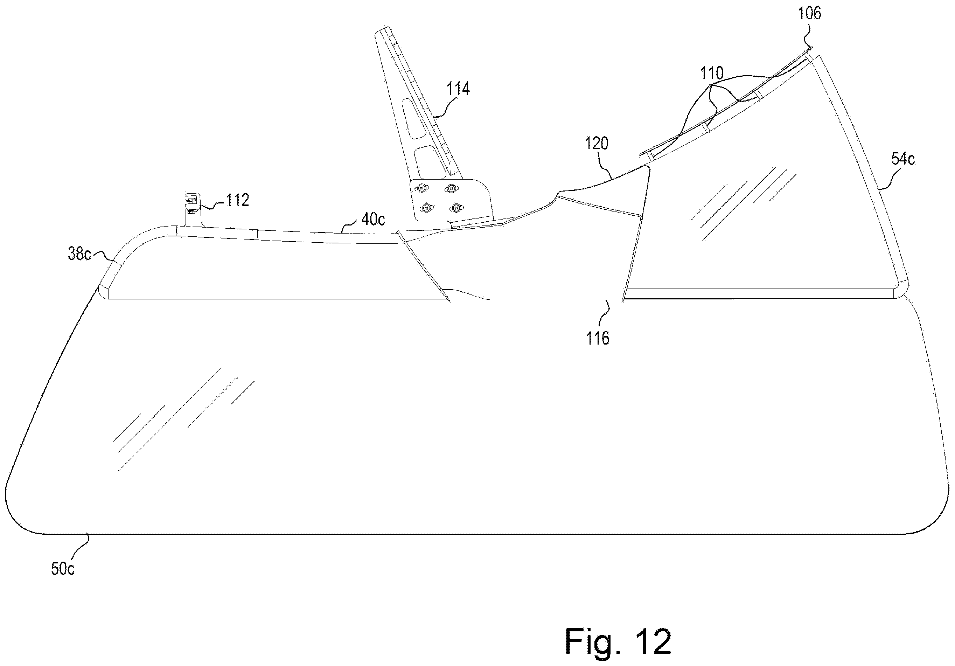

Another example is shown in Figs. 11-18. In this example, elements with similar function to previous examples are identified with the same number, and the suffix "c". For example, the curtain shown in Fig. 2 is labeled 50, while the curtain of Fig. 11 is labeled 50c and generally serves the same function. The curtain 50c is clearly ornamentally and structurally different from the curtain 50. As the aisleway curtain 154 (Fig. 10) is generally known in the art, it will not be described further although the cabin divider 20c will in some applications cooperate with an aisleway curtain 154.

Looking to Fig. 11, an example is shown of a cabin divider 20c providing a separation between compartments of an aircraft 25. The cabin divider 20c comprising a curtain 50c, a view block 54c, and a support arm 40c which when installed are commonly adjacent an aisleway curtain 154. These components (curtain 50c, view block 54c, support arm 40c, and aisleway curtain 154) cooperate to provide visual and some acoustic separation between compartments. When these components are not made of opaque materials, they do not provide a visual obstruction for sky marshals and flight staff, who for security and safety, may need to see between compartments. Although the term block is used herein, the term is used to include devices which visually and/or acoustically separate compartments.

The view block 54c of this example may be attached by way of fasteners 108 and 110 to the luggage stowage compartment 42 shown previously. A backing plate 106 may be positioned inside the luggage stowage compartment 42 which may reinforce the attachment to the view block 54. The view block 54c may fit forward of, rearward of, or on both sides of the curtain 50c when the luggage stowage compartment 42 is opened.

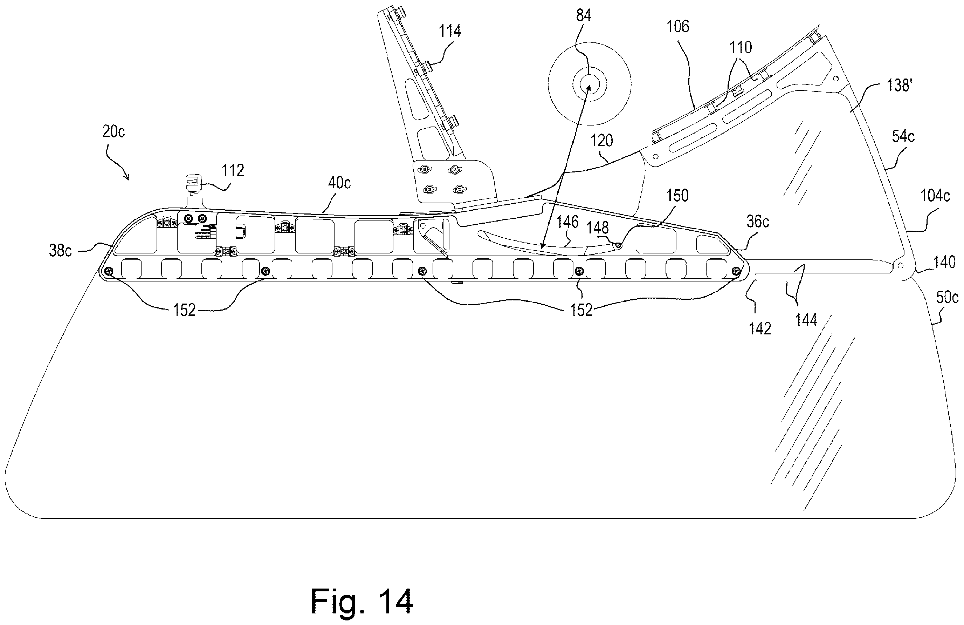

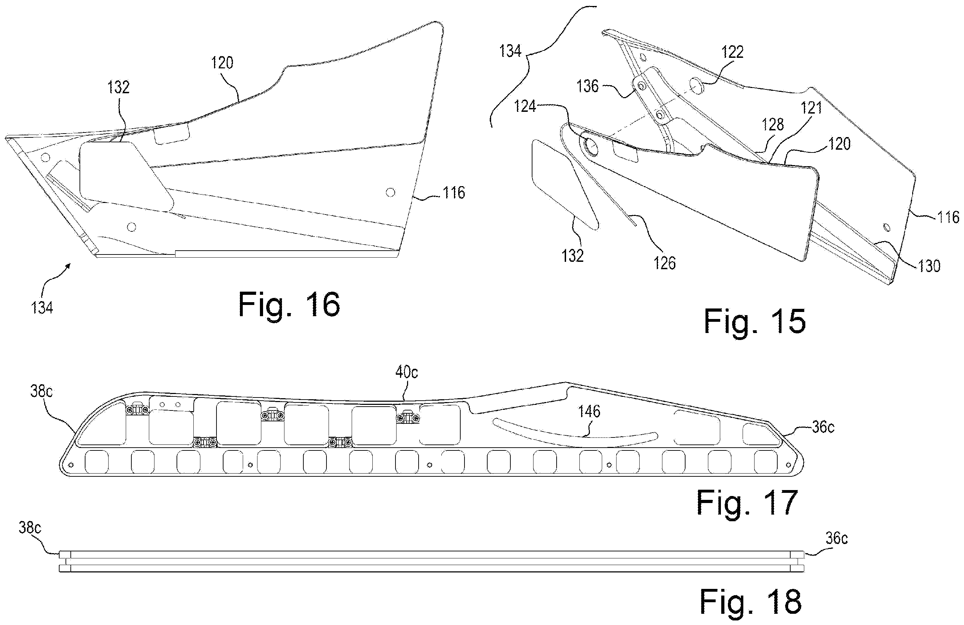

In this example, the support arm 40c may be attached to the frame 22 of the aircraft 25 (Fig. 10) through a PSU rail 156 (Fig. 2) via a bracket 112 on the second end 38c of the support arm 40c. Likewise, the median portion of the support arm 40c may be attached to the frame 22 through the back side 158 (Fig. 2) of the luggage stowage compartment 42 via a bracket 114. While the first end 36c of the support arm 40c is generally obscured from view in Fig. 11 by one of two cover plates 116 (Fig. 15), the first end 36c can be seen in Fig. 14 where the cover plate 116 closest to the viewer has been removed.

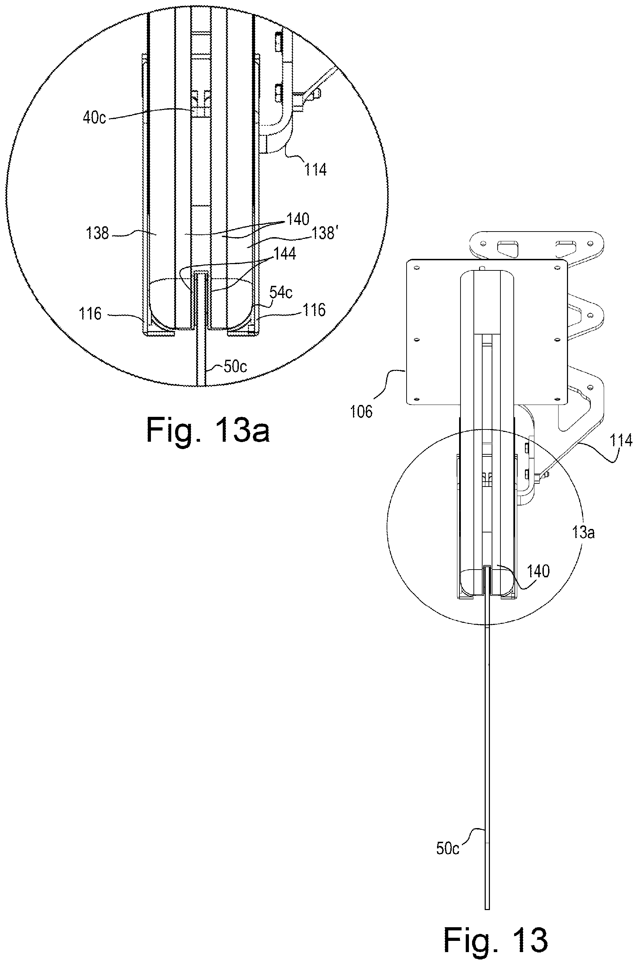

Looking to Fig. 14, the first end 36c of the support arm 40c can be seen. In this example the support arm 40c slides between the sides of the view block 54c. A small friction-reducing component may be provided there-between to avoid scratching the curtain 50c, and to aid in opening and closing of the luggage stowage compartment 42. This arrangement can more easily be understood by looking at the example of Fig. 13 and the detail view of Fig. 13a which show the longitudinal spatial arrangement of the components being discussed. In particular the relationship between the support arm 40c the cover plates 116 (Fig. 11), and a pair of (optional) pivot plates 120 is more easily seen. Each of these can be seen in Fig. 15 from a different angle in an exploded view. In this example, the pivot plates 120 have an upper surface 121 which engages the face 52 of the luggage stowage compartment 42. Due to cooperation of the axle 122, bushing 124, and compression spring 126, the surface 121 remains in (sliding) contact with the face 52 as the compartment 42 is opened and closed. In the example shown, the compression spring 126 rests against an upper surface of a support arm 130 which may be fixed to the cover plate 116. In at least one example an inner pivot cover 132 is provided to keep the bushing 124 upon the axle 122 and to maintain the spring 126 against the support arm 130.

Each cover plate 116, pivot plate 120, compression spring 126, support arm 130 and inner pivot plate 132 cooperate to form a cover assembly 134. The cover assembly encloses at least part of the gap between the view block 54c and the luggage stowage compartment 42. In other examples, the cover assembly may be omitted, and the view block 54c reconfigured to cover the entire area.

As in the example of Fig. 11, a cover assembly 134 may be provided on either side of the view block 54c to move in cooperation therewith. Each of the cover assemblies may utilize a bracket 136 (Fig. 15) to attach the cover assembly 134 to the support arm 40c.

Looking to Fig. 14, an example of the view block 54c can be seen constructed in a hollow core manner. In this example, shown in cross-section, a first cover panel 138 (See Fig. 11) is not shown so that the opposing cover panel 138 can be seen along with a separating frame 140. The separating frame 140 of this example has surfaces defining a longitudinal gap 144. This gap 144 allows the cover panels 138 of the view block 54c to pass on either side of the inboard portion of the curtain 50c. Also in this example, an outboard edge 142 is adjacent the first end 36c of the support arm 40c. This arrangement aids in positioning the view block 54c around the curtain 50c, and may aid in keeping debris and body parts out of the area therebetween.

As the view block 54c of this example is attached to the luggage stowage compartment 42, and as the compartment repositions as described above, the axis of rotation of the view block 54c in one example will be at the pivot 84. Thus, an arcuate channel 146 may be provided, centered upon the pivot 84 so as to allow adjustment of a slider 148 and screw 150. This slider 148 adds additional stability to the cabin divider 20c.

In one example, the curtain 50c is attached to the support arm 40c by way of fasteners 152.

## Claims

1. A divider (20) for providing part of a visual separation between sections of a passenger cabin (32) of a commercial aircraft (25), the divider (20) comprising:
a. a support arm (40) configured to be fixedly connected to the frame (22) of the aircraft (25) above a passenger seat, such that an outer edge (44) of the support arm (40) faces an aisle of the passenger cabin (32), and the support arm (40) forms a cutout to allow the face of a luggage stowage compartment to open without interference from the support arm (40), with an inner edge (48) of the support arm (40) adjacent the face (52) of a luggage stowage compartment (42) when the stowage compartment (42) is opened and a region between the support arm (40) and the face of the luggage stowage compartment when the stowage compartment (42) is closed,
b. a curtain (50) attached to a lower edge (46) of the support arm (40) and projecting vertically below the support arm (40), and
c. a rigid view block (54) configured to be fixedly attached to the face (52) of the luggage stowage compartment (42) such that it moves therewith and visually blocks the region between the support arm and the face of the luggage stowage compartment (42) when the luggage stowage compartment (42) is closed.

2. The divider (20) as recited in claim 1 further comprising:
a. a pivot linkage (92, 98) configured to connect one end (82) of the view block (54) to the aircraft (25); and
b. a bracket (74) positionably connecting an opposing end (76) of the view block (54) to the face (52) of the luggage stowage compartment (42).

3. The divider (20) as recited in claim 2 wherein the pivot linkage (92, 98) is a four-bar linkage comprising:
a. an inboard link arm (92) configured to attach at an inboard upper pivot (94) to the aircraft frame (22) and attached at an inboard lower pivot (96) to the view block (54), and
b. an outboard link arm (98) configured to attach at an outboard upper pivot (100) to the aircraft frame (22) and attached at an outboard lower pivot (102) to the view block (54).

4. The divider (20) as recited in claim 3 wherein:
a. the inboard link arm (92) is configured to attach at the inboard upper pivot (94) to the aircraft frame (22) through the support arm (40); and is attached at the inboard lower pivot (96) to the view block (54), and
b. the outboard link arm (98) is configured to attach at the outboard upper pivot (100) to the aircraft frame (22) through the support arm (40); and is attached at the outboard lower pivot (102) to the view block (54).

5. The divider (20) as recited in claim 3 wherein the distance between centers of rotation of the inboard upper pivot (94) and the outboard upper pivot (100) is not equal to the distance between centers of rotation of the inboard lower pivot and the outboard lower pivot.

6. The divider (20) as recited in claim 1 wherein the curtain (50) is rigid.

7. The divider (20) as recited in claim 1 wherein the curtain (50) comprises fabric.

8. The divider (20) as recited in claim 1 wherein the curtain (50) is positionably attached to the support arm (40).

9. The divider (20) as recited in claim 1 wherein the curtain (50) is configured to extend from the lower edge (46) of the support arm (40), downward substantially to the top of the back of a passenger seat such that the passenger seat cooperates with the divider (20) to visually separate the sections of the aircraft passenger cabin (32).

10. The divider as recited in claim 1 wherein the support arm comprises a surface or surfaces defining a gap in a lower edge thereof to allow passage of a portion of the view block therethrough.

11. The divider (20) as recited in claim 1 further comprising a bracket (74) configured to fixedly connect an inboard end of the view block (54) to the face (52) of the luggage stowage compartment (42).

12. The divider (20) as recited in claim 1 wherein the view block (54) is an assembly formed of longitudinally opposed panels (138) and a frame (22) therebetween to allow passage of a portion of the curtain (50) between the longitudinally opposed panels (138).

13. The divider (20) as recited in claim 1 further comprising:
a. a pivot plate (120) having a surface (52) configured to be adjacent the face (52) of the luggage stowage compartment (42), the pivot plate (120) rotatably attached to the support arm (40);
b. a spring mechanism (126) configured to bias the pivot plate (120) toward the luggage stowage compartment (42); and
c. wherein the pivot plate (120) is adjacent the view block (54) and rotates about a different axis than the view block (54).

14. The divider (20) as recited in claim 13 wherein the spring is a compression spring (126).

## Patentansprüche

1. Teiler (20) zum Bilden eines Teils einer Sichttrennung zwischen Abschnitten einer Passagierkabine (32) eines Verkehrsflugzeugs (25), wobei der Teiler (20) umfasst:
a. einen Tragarm (40), der konfiguriert ist, um über einem Passagiersitz fest mit dem Rahmen (22) des Flugzeugs (25) verbunden zu werden, so dass eine Außenkante (44) des Tragarms (40) einem Gang der Passagierkabine (32) zugewandt ist, und der Tragarm (40) einen Ausschnitt bildet, um das Öffnen der Vorderseite eines Gepäckablagefachs ohne Behinderung durch den Tragarm (40) zu ermöglichen, wobei eine Innenkante (48) des Tragarms (40) an die Seite (52) eines Gepäckablagefachs (42), wenn das Ablagefach (42) geöffnet ist, und an einen Bereich zwischen dem Tragarm (40) und der Seite des Gepäckablagefachs (42) angrenzt, wenn das Ablagefach (42) geschlossen ist,
b. einen Vorhang (50), der an einer Unterkante (46) des Tragarms (40) befestigt ist und vertikal unter dem Tragarm (40) absteht, und
c. einen starren Sichtblocker (54), der konfiguriert ist, um fest an der Seite (52) des Gepäckablagefachs (42) angebracht zu werden, so dass er sich mit diesem bewegt und den Bereich zwischen dem Tragarm und der Seite des Gepäckablagefachs (42) visuell blockiert, wenn das Gepäckablagefach (42) geschlossen ist.

2. Teiler (20) nach Anspruch 1, der ferner umfasst:
a. ein Schwenkgestänge (92, 98), das konfiguriert ist, um ein Ende (82) des Sichtblockers (54) mit dem Flugzeug (25) zu verbinden; und
b. eine Halterung (74), die ein gegenüberliegendes Ende (76) des Sichtblockers (54) positionierbar mit der Vorderseite (52) des Gepäckablagefachs (42) verbindet.

3. Teiler (20) nach Anspruch 2, bei dem das Schwenkgestänge (92, 98) ein Viergelenkgestänge ist, das umfasst:
a. einen bordinneren Lenkerarm (92), der konfiguriert ist, um an einem bordinneren oberen Drehpunkt (94) am Flugzeugrahmen (22) befestigt zu werden, und der an einem bordinneren unteren Drehpunkt (96) am Sichtblocker (54) befestigt ist, und
b. einen bordäußeren Lenkerarm (98); der konfiguriert ist, um an einem bordäußeren oberen Drehpunkt (100) am Flugzeugrahmen (22) befestigt zu werden, und der an einem bordäußeren unteren Drehpunkt (102) am Sichtblocker (54) befestigt ist.

4. Teiler (20) nach Anspruch 3, bei dem:
a. der bordinnere Lenkerarm (92) konfiguriert ist, um an dem bordinneren oberen Drehpunkt (94) über den Tragarm (40) an dem Flugzeugrahmen (22) befestigt zu werden; und an dem bordinneren unteren Drehpunkt (96) an dem Sichtblocker (54) befestigt ist, und
b. der bordäußere Lenkerarm (98) konfiguriert ist, um an dem bordäußeren oberen Drehpunkt (100) über den Tragarm (40) an dem Flugzeugrahmen (22) befestigt zu werden; und an dem bordäußeren unteren Drehpunkt (102) an dem Sichtblocker (54) befestigt ist.

5. Teiler (20) nach Anspruch 3, bei dem der Abstand zwischen den Drehmittelpunkten des bordinneren oberen Drehpunktes (94) und des bordäußeren oberen Drehpunktes (100) nicht gleich dem Abstand zwischen den Drehmittelpunkten des bordinneren unteren Drehpunktes und des bordäußeren unteren Drehpunktes ist.

6. Teiler (20) nach Anspruch 1, bei dem der Vorhang (50) starr ist.

7. Teiler (20) nach Anspruch 1, bei dem der Vorhang (50) aus Stoff besteht.

8. Teiler (20) nach Anspruch 1, bei dem der Vorhang (50) positionierbar an dem Tragarm (40) befestigt ist.

9. Teiler (20) nach Anspruch 1, bei dem der Vorhang (50) konfiguriert ist, um sich von der Unterkante (46) des Tragarms (40) im Wesentlichen nach unten bis zur Oberkante der Rückenlehne eines Passagiersitzes zu erstrecken, so dass der Passagiersitz mit dem Teiler (20) zusammenwirkt, um die Abschnitte der Flugzeug-Passagierkabine (32) optisch zu trennen.

10. Teiler nach Anspruch 1, bei dem der Tragarm eine Oberfläche oder Oberflächen aufweist, die einen Spalt in einer Unterkante davon definieren, um den Durchgang eines Teils des Sichtblockers dadurch zu ermöglichen.

11. Teiler (20) nach Anspruch 1, ferner mit einer Halterung (74), die konfiguriert ist, um ein bordinneres Ende des Sichtblockers (54) fest mit der Seite (52) des Gepäckablagefachs (42) zu verbinden.

12. Teiler (20) nach Anspruch 1, bei dem der Sichtblocker (54) eine Baugruppe ist, die aus in Längsrichtung gegenüberliegenden Platten (138) und einem Rahmen (22) dazwischen gebildet ist, um den Durchgang eines Teils des Vorhangs (50) zwischen den in Längsrichtung gegenüberliegenden Platten (138) zu ermöglichen.

13. Teiler (20) nach Anspruch 1, ferner umfassend:
a. eine Schwenkplatte (120) mit einer Oberfläche (52), die konfiguriert ist, um an die Seite (52) des Gepäckablagefachs (42) anzugrenzen, wobei die Schwenkplatte (120) drehbar an dem Tragarm (40) befestigt ist;
b. einen Federmechanismus (126), der konfiguriert ist, um die Schwenkplatte (120) in Richtung des Gepäckablagefachs (42) zu beaufschlagen; und
c. wobei die Schwenkplatte (120) an den Sichtblocker (54) angrenzt und sich um eine andere Achse als der Sichtblocker (54) dreht.

14. Teiler (20) nach Anspruch 13, bei dem die Feder eine Druckfeder (126) ist.

## Revendications

1. Séparateur (20) pour fournir une partie d'une séparation visuelle entre des sections d'une cabine passagers (32) d'un aéronef commercial (25), le séparateur (20) comprenant :
a. un bras de support (40) configuré pour être relié de manière fixe au cadre (22) de l'aéronef (25) au-dessus d'un siège passager, de sorte qu'un bord extérieur (44) du bras de support (40) soit en face d'un couloir de la cabine passagers (32), et le bras de support (40) forme une découpe pour permettre à la face d'un compartiment de rangement de bagages d'être ouverte sans interférence du bras de support (40), avec un bord intérieur (48) du bras de support (40) adjacent à la face (52) d'un compartiment de rangement de bagages (42) lorsque le compartiment de rangement (42) est ouvert et à une région entre le bras de support (40) et la face du compartiment de rangement de bagages lorsque le compartiment de rangement (42) est fermé,
b. un rideau (50) attaché à un bord inférieur (46) du bras de support (40) et faisant saillie verticalement en dessous du bras de support (40), et
c. un bloc de visualisation rigide (54) configuré pour être attaché de manière fixe à la face (52) du compartiment de rangement de bagages (42) de sorte qu'il se déplace avec celle-ci et bloque visuellement la région entre le bras de support et la face du compartiment de rangement de bagages (42) lorsque le compartiment de rangement de bagages (42) est fermé.

2. Séparateur (20) tel que décrit dans la revendication 1, comprenant en outre :
a. une liaison pivotante (92, 98) configurée pour relier une extrémité (82) du bloc de visualisation (54) à l'aéronef (25) ; et
b. un support (74) reliant de manière positionnable une extrémité opposée (76) du bloc de visualisation (54) à la face (52) du compartiment de rangement de bagages (42).

3. Séparateur (20) tel que décrit dans la revendication 2, dans lequel la liaison pivotante (92, 98) est une liaison à quatre barres comprenant :
a. un bras de liaison intérieur (92) configuré pour s'attacher au niveau d'un pivot supérieur intérieur (94) au cadre d'aéronef (22) et attaché au niveau d'un pivot inférieur intérieur (96) au bloc de visualisation (54), et
b. un bras de liaison extérieur (98) configuré pour s'attacher au niveau d'un pivot supérieur extérieur (100) au cadre d'aéronef (22) et attaché au niveau d'un pivot inférieur extérieur (102) au bloc de visualisation (54).

4. Séparateur (20) tel que décrit dans la revendication 3, dans lequel :
a. le bras de liaison intérieur (92) est configuré pour s'attacher au niveau du pivot supérieur intérieur (94) au cadre d'aéronef (22) par l'intermédiaire du bras de support (40) ; et est attaché au niveau du pivot inférieur intérieur (96) au bloc de visualisation (54), et
b. le bras de liaison extérieur (98) est configuré pour s'attacher au niveau du pivot supérieur extérieur (100) au cadre d'aéronef (22) par l'intermédiaire du bras de support (40) ; et est attaché au niveau du pivot inférieur extérieur (102) au bloc de visualisation (54).

5. Séparateur (20) tel que décrit dans la revendication 3, dans lequel la distance entre les centres de rotation du pivot supérieur intérieur (94) et du pivot supérieur extérieur (100) n'est pas égale à la distance entre les centres de rotation du pivot inférieur intérieur et du pivot inférieur extérieur.

6. Séparateur (20) tel que décrit dans la revendication 1, dans lequel le rideau (50) est rigide.

7. Séparateur (20) tel que décrit dans la revendication 1, dans lequel le rideau (50) comprend un tissu.

8. Séparateur (20) tel que décrit dans la revendication 1, dans lequel le rideau (50) est attaché de manière positionnable au bras de support (40).

9. Séparateur (20) tel que décrit dans la revendication 1, dans lequel le rideau (50) est configuré pour s'étendre à partir du bord inférieur (46) du bras de support (40), vers le bas essentiellement jusqu'à la partie supérieure du dossier d'un siège passager de sorte que le siège passager coopère avec le séparateur (20) pour séparer visuellement les sections de la cabine passagers (32) de l'aéronef.

10. Séparateur tel que décrit dans la revendication 1, dans lequel le bras de support comprend une surface ou des surfaces définissant un espace dans un bord inférieur de celui-ci pour permettre le passage d'une partie du bloc de visualisation à travers celui-ci.

11. Séparateur (20) tel que décrit dans la revendication 1, comprenant en outre un support (74) configuré pour relier de manière fixe une extrémité intérieure du bloc de visualisation (54) à la face (52) du compartiment de rangement de bagages (42).

12. Séparateur (20) tel que décrit dans la revendication 1, dans lequel le bloc de visualisation (54) est un ensemble formé de panneaux longitudinalement opposés (138) et d'un cadre (22) entre eux pour permettre le passage d'une partie du rideau (50) entre les panneaux longitudinalement opposés (138).

13. Séparateur (20) tel que décrit dans la revendication 1, comprenant en outre :
a. une plaque pivotante (120) ayant une surface (52) configurée pour être adjacente à la face (52) du compartiment de rangement de bagages (42), la plaque pivotante (120) étant attachée en rotation au bras de support (40) ;
b. un mécanisme à ressort (126) configuré pour solliciter la plaque pivotante (120) vers le compartiment de rangement de bagages (42) ; et
c. dans lequel la plaque pivotante (120) est adjacente au bloc de visualisation (54) et tourne autour d'un axe différent de celui du bloc de visualisation (54).

14. Séparateur (20) tel que décrit dans la revendication 13, dans lequel le ressort est un ressort de compression (126).
